# EUROPEAN PATENT SPECIFICATION

(11) **EP 0 565 019 B1**
(45) Date of publication and mention of the grant of the patent: **31.07.1996**
(21) Application number: 93105590.9
(22) Date of filing: 05.04.1993
(51) Int. Cl.: B65B 57/14, B65G 43/08

(54) **Device for incorporating missing articles in a stream of articles in the process of being packaged**
Vorrichtung zum Einführen von fehlenden Gegenständen in einen Strom von Gegenständen während des Verpackungsvorganges
Dispositif pour incorporer des articles manquants dans un courant d'articles pendant le procès d'emballage

(30) Priority: 09.04.1992 IT TO920329
(43) Date of publication of application: 13.10.1993
(73) Proprietor: CAVANNA S.p.A., I-28077 Prato Sesia Novara (IT)
(72) Inventor: Francioni, Renzo, I-28077 Prato Sesia (Novara) (IT)
(74) Representative: Bosotti, Luciano

(56) References cited:
- EP-A- 0 273 288

## Description

The present invention relates in general to the problem of incorporating missing components in a continuous or substantially continuous stream of products in the process of being packaged.

The invention has been developed with particular attention to possible use in automatic packaging plants, in particular for foodstuffs.

Within this area of application, the articles being packaged are conventionally arranged in a continuous or substantially continuous stream of successive articles which advance at a precisely determined speed and relative position on conveyor devices, such as motorized belts or the like. Frequently a plurality of streams of articles are advanced in parallel along adjacent paths.

Usually the articles considered to be faulty (for example articles with irregular dimensions or positions, packages which do not contain the required number of products or are empty or have manufacturing defects) are eliminated so as to prevent the processing unit further downstream from malfunctioning. However, eliminating the defective articles produces (individual or grouped) empty positions in the stream, which positions have to be eliminated to ensure that the handling unit located further downstream operates correctly. Taking the example of packaging machines for producing packaging of the type commonly known as "multi-pack" from a regular stream of individual packages, if there are empty spaces in this incoming stream, it is clear that one or more individual packages will be missing from at least some of the outgoing multiple packages produced.

In principle it might be conceivable to eliminate the empty positions by means of an operation rendering the stream more dense or bunched, in practice decelerating or directly stopping the article stream in places so that the empty positions are eventually filled as a result of the stream becoming more dense.

However for various reasons this solution is not considered satisfactory.

Firstly, generating an accumulation in order to eliminate any empty positions which occur in a stream of articles already at precise spacings, would involve having to "disengage" the articles from the accumulation in succession in order to produce a stream of regularly spaced articles once again.

Even excluding this aspect, this solution would nevertheless be unsatisfactory if it were applied to the situation (which, as has been demonstrated, is common) in which there is a plurality of streams of articles advancing in parallel towards the same processing station (for example a wrapping or boxing machine). Indeed it is to be expected that any empty positions in the various parallel streams will not be determined exactly uniformly. Frequently the act of eliminating defective articles causing the empty positions to form is brought about by deterministic phenomena which can systematically affect a given batch of articles (for example an incorrect or uneven cooking phase in the case of oven-produced foodstuffs). It thus results that the type of intervention described above would, however, ultimately thin out one or more of the streams in question excessively in the presence of empty positions, with the resultant inadequate supply to the station situated downstream.

A solution of this type therefore makes it essential to eliminate the empty positions in the stream rendering the stream itself complete by means of articles inserted into the empty positions.

This solution has already been adopted in some packaging plants in which the work is performed by appropriate members of staff; however the results have not been entirely satisfactory.

Firstly, the direct intervention of the personnel employed is not viable in those situations in which the streams in question are of high intensity (for example of the order of hundreds of articles per minute). In this case, the advance speed of the articles is so high that it is physically impossible for a human operator to insert the missing articles into the stream.

Therefore, in the majority of cases, the integrating operation is performed in a phase in which the linear advance speed of the articles processed is low. For example, in the case of packaging plants for products such as biscuits or crackers, the operation is performed in correspondence with conveyors upstream of the boxing machine, on which the bags or packets containing the products advance arranged in the manner of roof tiles (staggered). The personnel can detect the empty positions in the stream in the form of a more or less marked reduction in the angle of inclination of the imbricated products. It is then possible to intervene in the areas where this reduction is noted and insert the missing articles so that the necessary advance conditions are restored at least approximately.

In addition to being approximate and hence imprecise, an operation of this type, being based on a purely qualitative estimate requires in each case extreme attention and concentration in addition to a certain degree of manual dexterity in performing the integrating operation on a stream of advancing imbricated products without making them fall and further damage the stream.

It is therefore necessary to provide means which can perform the integrating operation automatically on a stream of advancing products, so as to eliminate any gaps in the said stream by filling them.

The present invention aims to fulfil this requirement.

In accordance with the present invention, this object is achieved by means of a device with the characteristics mentioned specifically in the following claims.

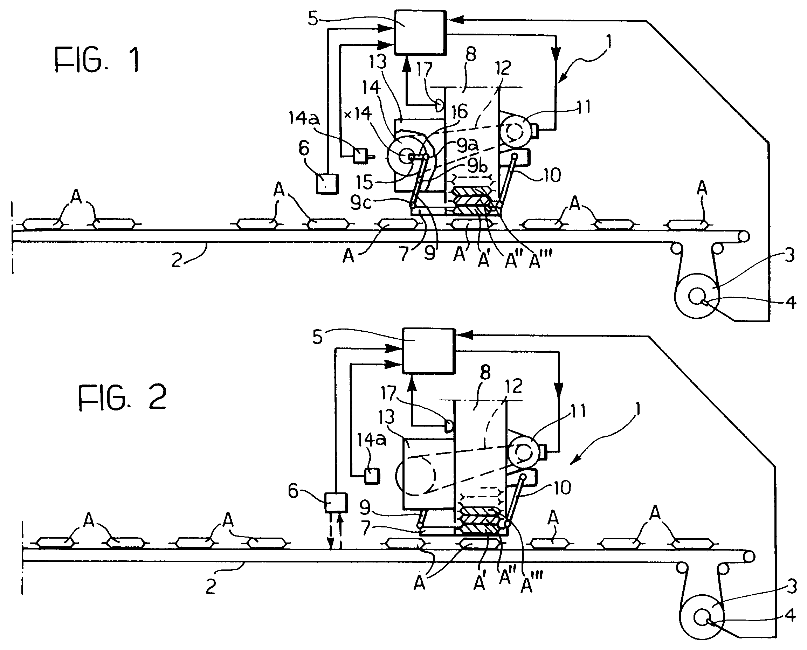

The invention will now be described by way of non-limiting example with reference to the appended drawings, comprising Figures 1 to 8, which show in succession operating positions of a device according to the invention.

The device according to the invention, generally designated 1, is intended to function on a continuous or substantially continuous stream of articles A which advance (from left to right, referring to the viewing direction of the figures in the appended drawings) on a conveyor 2 constituted (according to a well-known solution) by a belt closed to form a loop moved by a main drive roller 3. There is associated with the roller 3 (or with the belt 2 in general) a tachymetric detector 4 (for example a phonic wheel or encoder) which emits a tachymetric signal identifying the advance position of the belt 2 (and hence of the articles A advancing on the latter). These signals are transmitted to a central processing unit 5 (for example a so-called PLC) which monitors the general operation of the device in order to synchronize its operation with the advance movement of the articles A.

The above is in accordance with criteria well-known in the prior art which need not be mentioned here, nor are they important for the comprehension of the invention. It is mentioned in particular that the belt 2 essentially has no devices for controlling the articles A, which rest freely on the said belt.

It will further be noted that, although the preceding description is given with reference to a single stream of articles A, the solution according to the invention is perfectly suitable for performing an integrating operation on a plurality of streams of articles advancing in parallel. In this respect the structure of the device 1 described below is also intended to be reproduced in an identical or substantially identical manner for the other parallel advancing streams.

In the drawings 6 designates a sensor (for example a photoelectric sensor of the known type, such as a photoelectric sensor produced by the German company, Erwin Sick) associated with the conveyor 2 generally upstream of the device 1 (with respect to the advance direction of the articles A) and of which the function is to detect selectively the presence of empty spaces (that is missing articles A) in the stream advancing on the conveyor 2. The operation involves detection performed according to criteria widely known in the art. It will be appreciated that, although it is preferable to use a photoelectric sensor, this is not essential, in fact it is possible to use sensors which operate in a similar manner, such as ultrasonic sensors, mechanical sensors or sensors of some other type.

In each case, since the sensor 6 detects the presence of empty positions on the stream upstream of the integrating device 1, the PLC 5 is informed of the existence of an empty position of this type in the stream before the empty position passes under the device 1. In addition, since the PLC 5 also receives the tachymetric signal delivered by the sensor 4, the PLC itself can determine precisely the amount of time after which the empty position will pass under the device 1 as a function of the advance speed of the belt 2.

The device 1 comprises a cradle 7 which is generally horizontal and mounted at the lower end of a hopper feed device 8 which is generally vertical and disposed with its distributor outlet opposite the cradle 7.

The hopper feed device 8 is designed to receive in its interior a given number of articles A', A'', A''' ... (identical to the articles A advancing on the belt 2) intended to fill the empty positions so as to restore the integrity of the advancing stream.

Usually the hopper 8 is supplied manually by the plant's supervising personnel. In each case this action is not as critical (in terms of attention, speed and skill of intervention required) as, in contrast, the direct, manual integration of the missing articles. Frequently it is sufficient to check and supply the articles at periodic intervals (even several minutes apart) to ensure that the device 1 and the installation with which it is associated are operating correctly.

The articles A', A'', A''' for performing the integration function (known in the following as "articles to be integrated") are advanced towards the lower mouth of the hopper 8 and supplied normally by gravity.

In the embodiment illustrated, the cradle 7 is mounted on the same structure which supports the hopper 8 on the casing (not illustrated in the drawings) of the machine by means of pairs of oscillating arms 9, 10. The assembly is generally arranged in the form of a parallelogram articulated such that the cradle 7 is provided with and retains a generally horizontal orientation below the mouth of the hopper 8 whilst the cradle 7 itself performs a general reciprocating swinging movement with respect to the hopper 8 and its lower feed mouth.

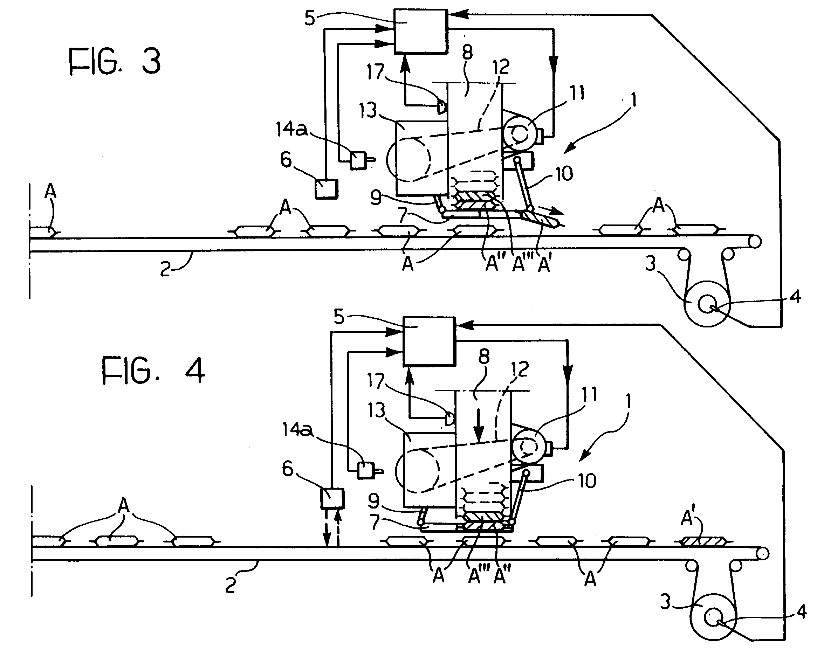

This movement is performed between a rearward position (Figures 1, 2, 4, 5, 7) in which the cradle 7 can receive by gravity the article to be integrated A', A'', A''' which is in the lower position of the hopper feed device 8, and a forward position (Figures 3, 6 and 8) in which the cradle 7 closes the lower mouth of the hopper conveyor and simultaneously deposits the article A', A'', A''' previously taken from the feed device onto the belt 2 below.

It will be appreciated that the adjectives "rearward" and "forward" refer to the advance direction of the articles A on the conveyor (from the left to the right in the drawings).

The movement from the rearward position to the forward position is performed in the manner of a ballistic launch intended to be as if the article A', A'', A''', which is in the cradle 7, were projected towards the conveyor 2:
- at a terminal launch speed corresponding substantially to the advance speed of the articles A, determined by the advance speed of the conveyor 2; and
- with a time (or phase) ratio with respect to the movement of the conveyor 2 such that the article launched from the cradle 7 falls onto the conveyor 2 below at a point which is exactly equidistant from the articles A preceding and following it in the stream.

In this way an action of precise integration in the stream itself is performed, the integrity of the stream being restored and the empty positions produced by the preceding rejection of defective articles being eliminated without being prejudicial to the exact ordering (timing) of the articles in the reintegrated stream.

The ballistic action in which the articles to be integrated A', A'', A''' are projected by the cradle 7 is controlled by a launch assembly controlled by the PLC 5 which receives (from the sensor 4 associated with the motor 3) the tachymetric signal relating to the speed and advance phases of the articles A, and (from sensor 6) the signal relative to the advance position of the empty spaces in the stream. The launch assembly is activated by a motor 11, typically a direct current motor or one of the brushless type with a relatively variable rotational speed and high precision. The motor 11 controls an intermittent device 13 of the type with a crank or an intervention device via a drive, typically a belt or chain drive 12, which generally activates a reduction unit. The latter device is designed to control the oscillating movement of at least one of the pairs of arms (the pair of arms 9 in the example illustrated) which support the cradle 7.

As shown schematically in Figure 1, the device 13 substantially comprises, in one of its possible embodiments, an input shaft moved by a pulley 14 about which the belt or chain drive 12 is wound. The pulley 14 is intended to drag a crank of which the pin 15 acts via a connecting rod 16 on the upper end 9a of the arm 9 in rotation about a horizontal shaft X 14. The arm is pivoted in the intermediate position (at 9b) about a horizontal shaft which is fixed relative to the casing of the device 1.

Since the rotation of the pulley 14 is controlled by the motor 11, it is thus possible to control the reciprocating oscillating movement of the arm 9 and hence the reciprocating movement of the cradle 7.

A further sensor, such as an optical or proximity sensor 14a, also connected to the PLC 5, checks whether, on completion of each oscillating movement, the motor 10 has stopped in an angular position such that the crank pin 15 is brought, within strict tolerances, to its position of maximum advance, to which position the maximum retraction of the lower end 9c of the arms 9, and thus of the cradle 7, corresponds.

In practice this position corresponds to the "arming" position from which the cradle 7 departs to perform the ballistic launch action projecting the articles A', A'', A''', etc.

This is the position which the device 1 assumes in the rest state, that is until the sensor 6 detects the presence of empty positions in the stream of articles A advancing on the conveyor 4.

This rest position, with the cradle 7 containing an article A' ready to be launched towards the conveyor 7 to fill a space in the stream, is illustrated in Figure 1.

Figure 2 shows the situation in which the sensor 6 detects an empty position in the stream of articles A.

At this point the PLC 5 (via the internal program, performed according to known criteria which need not be illustrated at this point) detects the advance speed of the conveyor 2 (which can also be varied in time, for example as a function of variations in the speed at which the articles A are absorbed into the stations located downstream) and correlates it with the distance between the detecting position in which the sensor 6 acts and the dimensions of the articles A, in such a way that, when the empty position passes below the device 1, the motor 11 is activated so that it projects the cradle 7 forwards by means of the device 13 and the arms 9. The launch of the article A' in the cradle towards the conveyor 2 is thus determined in order to incorporate the said article into the previously detected space at the exact speed and desired phase ratio.

It should be noted that the action of launching the articles to be integrated A', A'', A''' ... from the cradle 7 to the conveyor 2 below generally does not comprise any particular rebounding or instability. The cradle 7 is separate from the upper part of the belt 2 by a distance which is slightly greater than the height of the articles A. Since this height can vary when the features of the articles A are changed, the entire device 1 is mounted on a structure which can be moved in a vertical direction (not illustrated) so that it can vary selectively the height of the cradle 7 relative to the upper part of the belt 2. Secondly, as stated above, the speed of movement of the motor 11 is correlated (taking account of the drive factors expressed by the drive 12 and the mechanism 13) with the advance speed of the belt 2 such that the cradle 7 travels at exactly the same speed as the belt 2 at least on the final part of its launch course. The launch itself, therefore, corresponds to a simple depositing of the article A on the conveyor 2 below; at the moment the article A', A'', A''' is launched, the speed of the conveyor relative to the cradle 7, and thus to the article deposited, is zero.

Immediately upon completion of the operation to fill the space detected in the stream (Figure 3), the motor 11 again performs an advance movement such that the mechanism 13 brings the cradle 7 back into the retracted and armed position. In this position, the cradle 7 is ready to receive a further article A'', supplied from above by the hopper 8 (Figure 4).

At this point, the operation for restoring the integrity of the stream described above can be repeated according to the same method using a further empty position.

In particular the structure of the launch device 11 to 16 is such that, when the cradle 7 returns to the arming position, it permits a speed such that the device itself can cope with a plurality of successive spaces in the stream of articles A.

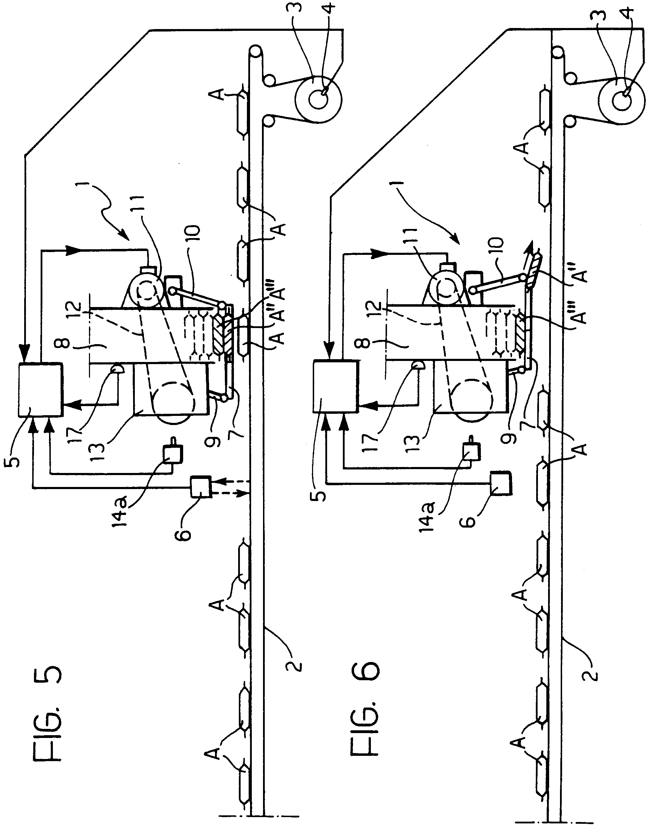

For example, Figure 5 shows a situation in which the sensor 6 detects two consecutive spaces, that is two successive positions from which an article A is missing, and sends a corresponding signal to the PLC 5.

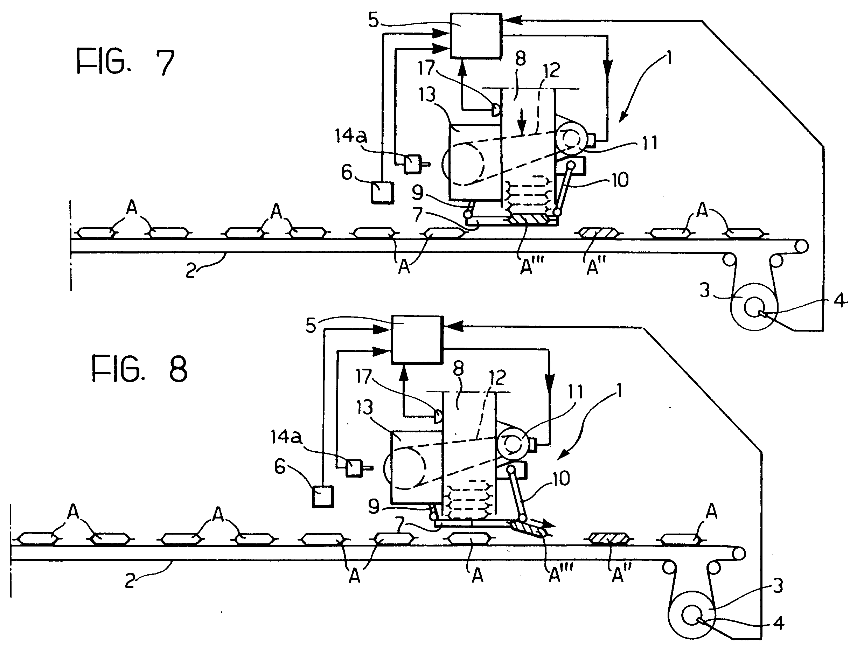

It is at this point that the device 1 can come into play:
- by performing a first launch action on the cradle 7 (Figure 6) as a result of the motor 11 being activated, which fills the first empty position with a first article A'' taken from the hopper 8;
- then returning rapidly as a result of the motor 11 being activated once more, into the arming position (Figure 7), in which the cradle 7 loads a further article A''' taken from the hopper 8; and
- then performing a further launch action (Figure 8) which fills the second space detected in the article stream with the article (A''') taken from the hopper 8.

It will be appreciated that the same sequence of operations can be performed with new rearming and launch processes in the case of more extensive shortages, for example three or more empty positions in succession.

In each case, the launch operation of the cradle 7 is performed in a similar manner:
- at the distance between the sensor 6 and the position for supplying or launching the articles A', A'', A''' downstream of the sensor 6;
- at the speed of the conveyor 2 and hence of the stream of articles A; and/or
- at the relative position (timing) of the articles A in the stream.

It will be appreciated that there can be associated with the device 1, for example with the hopper 8, a further sensor 17 (for example of the photoelectric or mechanical type) which is intended to detect when the number of the articles inside the hopper 8 drops below a lower monitoring level so that a signal is automatically emitted (for example via the PLC 5) to warn the installation supervising staff, who are thus informed of the need to fill the article reserve in the hopper 8.

The same sensor 17 (or another sensor) can also be used to count the operations for incorporating articles in the stream performed at a given time interval, identifying situations in which the number of operations for incorporating articles in the stream required at the device 1 reaches an upper limiting level in such a time interval. In this way it is if necessary possible to detect and signal the occurrence upstream of the device 1 of anomalies of the type which can cause virtually systematic gaps in the stream of articles A supplied beyond acceptable limits.

## Claims

1. Device for incorporating in a stream of articles (A) having empty positions, articles to be integrated (A', A'', A''') selectively inserted in the said empty positions, characterized in that it comprises:
- sensor means (6) for detecting the presence of the said empty positions in the said stream; and
- distributor means (1) for articles to be integrated (A', A'', A''') generally disposed downstream of the said sensor means (6) in the advance direction of the said stream of articles (A); the said distributor means (1) comprising launching means (7) which can project the said articles to be integrated (A', A'', A''') towards the said empty position at a speed and in a position correlated with the speed of the said stream of articles (A) and to the arrangement of the said empty positions.

2. Device according to Claim 1, characterized in that the said launching means (7) comprise a ballistic unit which can perform a general movement for launching the articles to be integrated (A', A'', A''') in the advance direction of the stream of articles (A).

3. Device according to Claim 2, characterized in that the said launching movement is generally performed between a retracted arming position (Figure 1) and a final launch position (Figure 3) at a speed which corresponds to the advance speed of the said stream of articles (A) at least in the vicinity of the said launching position.

4. Device according to any one of the preceding claims, characterized in that it comprises processing means (5) which are connected to the said sensor means (6) and can control the operation of the said launching means (7) at a time ratio relative to the signalling of the said sensor means (6) correlated at least with one of the dimensions selected from the group comprising:
- the distance between the sensor means (6) and the launching means (7);
- the speed of the stream of articles (A);
- the relative position (timing) of the articles (A) in the stream.

5. Device according to any one of the preceding claims, characterized in that the said means (7) for launching the articles to be integrated (A', A'', A''') ale located immediately above the said stream of articles (A).

6. Device according to Claim 1, characterized in that the position of the said launching means (7) can be adjusted selectively in terms of height relative to the support level (2) of the said stream of articles (A).

7. Device according to any one of the preceding claims, characterized in that the said stream of articles (A) advances on a conveyor (2) driven by a motor (3).

8. Device according to Claim 7, characterized in that the said conveyor (2) is substantially without any devices for controlling the articles (A).

9. Device according to any one of the preceding claims, characterized in that the said sensor means (6) comprise a photoelectric sensor.

10. Device according to any one of the preceding claims, characterized in that the said distributor means comprise a feed device (8) which can accommodate a given reserve of the said articles to be integrated (A', A'', A''') for supplying the said launching means (7).

11. Device according to Claim 10, characterized in that there are associated with the said feed device (8) sensor means (15) for detecting when the reserve of the said articles to be integrated (A', A'', A''') reaches a predetermined monitoring level in the feed device (8) itself.

12. Device according to Claim 10 or Claim 11, characterized in that the said feed device (8) is a hopper feed device.

13. Device according to any one of Claims 10 to 13, characterized in that the said feed device (8) is disposed in a position generally higher relative to the said launching means.

14. Device according to Claim 13, characterized in that the said articles to be integrated (A', A'', A''') are supplied from the feed device (8) to the launching means (7) by means of gravity.

15. Device according to Claim 3, characterized in that the launching means (7) can perform a general reciprocating movement between the said rearward position (Figure 1) and the said forward position (Figure 3).

16. Device according to any one of the preceding claims, characterized in that the launching means (7) are moved by motor means (11) having a constant advance direction.

17. Device according to Claim 16, characterized in that the said motor means comprise an electric motor (11), such as a direct current or brushless motor.

18. Device according to Claim 16 or claim 17, characterized in that drive means (12 to 16) with a general alternating movement are disposed between the said launching means (7) and the said motor means (11).

19. Device according to Claim 18, characterized in that the said drive means comprise a drive (12) which can perform a mechanical movement reduction.

20. Device according to Claim 19, characterized in that the said drive (12) is a belt or chain drive.

21. Device according to any one of Claims 18 to 20, characterized in that the said drive means (12 to 16) comprise an intervention device or a crank.

22. Device according to any one of Claims 3 or 15 to 21, characterized in that it comprises a further sensor (14a) which can identify the exact arrangement of the said launching means (7) in the said rearward position.

23. Device according to any one of the preceding claims, characterized in that the said launching means (7) comprise a cradle structure for receiving in its interior the said articles to be integrated (A', A'', A''') in order to project them towards the said stream.

24. Device according to Claim 23, characterized in that the said cradle structure is supported by oscillating arms (9, 10).

25. Device according to Claim 24, characterized in that the said oscillating arms (9, 10) together with the said cradle (7) form a generally parallelogram structure articulated with the said cradle (7) held in a generally horizontal position.

26. Device according to Claim 16 and Claim 24, characterized in that the said motor means (11) act on at least one of the said oscillating arms (9, 10).

## Patentansprüche

1. Vorrichtung, um in einen Strom von Gegenständen (A), der leere Stellen besitzt, einzugliedernde Gegenstände (A', A'', A''') einzuführen, die wahlweise in die leeren Stellen eingesetzt werden, dadurch gekennzeichnet, daß die Vorrichtung enthält:
- eine Fühlereinrichtung (6), um das Vorhandensein der leeren Stellen im Strom abzutasten; und
- eine Verteilereinheit (1) für einzugliedernde Gegenstände (A, A'', A'''), die in der Vorschubrichtung des Stroms von Gegenständen (A) im allgemeinen stromabwärts der Fühlereinrichtung (6) angeordnet ist; wobei die Verteilereinrichtung (1) eine Schleudereinrichtung (7) enthält, die die einzugliedernden Gegenstände (A', A'', A''') zur leeren Stelle mit einer Geschwindigkeit und in eine Stellung schleudern kann, die mit der Geschwindigkeit des Stroms von Gegenständen (A) sowie der Anordnung der leeren Stellen korreliert sind.

2. Vorrichtung gemäß Anspruch 1, dadurch gekennzeichnet, daß die Schleudereinrichtung (7) eine ballistische Einheit besitzt, die eine allgemeine Bewegung ausführen kann, um die einzugliedernden Gegenstände (A', A'', A''') in die Vorschubrichtung des Stroms von Gegenständen (A) zu schleudern.

3. Vorrichtung gemäß Anspruch 2, dadurch gekennzeichnet, daß die Schleuderbewegung im allgemeinen zwischen einer zurückgezogenen Ladestellung (Fig. 1) und einer endgültigen Schleuderstellung (Fig. 3) mit einer Geschwindigkeit ausgeführt wird, die zumindest in der Nähe der Schleuderstelle der Vorschubgeschwindigkeit des Stroms von Gegenständen (A) entspricht.

4. Vorrichtung gemäß irgendeinem der bisherigen Ansprüche, dadurch gekennzeichnet, daß die Vorrichtung eine Bearbeitungseinrichtung (5) enthält, die mit der Fühlereinrichtung (6) verbunden ist und den Betrieb der Schleudereinrichtung (7) in einem zeitlichen Verhältnis relativ zur Meldung der Fühlereinrichtung (6) steuern kann, das zumindest mit einer Abmessung korreliert ist, die aus einer Gruppe ausgewählt wird, wobei die Gruppe enthält:
- den Abstand zwischen der Fühlereinrichtung (6) und der Schleudereinrichtung (7);
- die Geschwindigkeit des Stroms von Gegenständen (A); und
- die relative Lage (Takt) der Gegenstände (A) im Strom.

5. Vorrichtung gemäß irgendeinem der bisherigen Ansprüche, dadurch gekennzeichnet, daß die Einrichtung (7), um die einzugliedernden Gegenstände (A', A'', A''') zu schleudern, unmittelbar oberhalb des Stroms von Gegenständen (A) angeordnet ist.

6. Vorrichtung gemäß Anspruch 1, dadurch gekennzeichnet, daß die Lage der Schleudereinrichtung (7) hinsichtlich der Höhe relativ zum Tragniveau (2) des Stroms von Gegenständen (A) wahlweise eingestellt werden kann.

7. Vorrichtung gemäß irgendeinem der bisherigen Ansprüche, dadurch gekennzeichnet, daß der Strom von Gegenständen (A) auf einer Fördereinrichtung (2) vorgeschoben wird, die von einem Motor (3) angetrieben wird.

8. Vorrichtung gemäß Anspruch 7, dadurch gekennzeichnet, daß die Fördereinrichtung (2) im wesentlichen keine Einrichtung besitzt, um die Gegenstände (A) zu steuern.

9. Vorrichtung gemäß irgendeinem der bisherigen Ansprüche, dadurch gekennzeichnet, daß die Fühlereinrichtung (6) einen fotoelektrischen Fühler enthält.

10. Vorrichtung gemäß irgendeinem der bisherigen Ansprüche, dadurch gekennzeichnet, daß die Verteilereinrichtung eine Zuführeinrichtung (8) enthält, die einen vorgegebenen Vorrat an einzugliedernden Gegenständen (A', A'', A''') aufnehmen kann, um die Schleudereinrichtung (7) anzuspeisen.

11. Vorrichtung gemäß Anspruch 10, dadurch gekennzeichnet, daß der Zuführeinrichtung (8) eine Fühlereinrichtung (15) zugeordnet ist, um abzutasten, wenn der Vorrat an einzugliedernden Gegenständen (A', A'', A''') einen vorgegebenen Überwachungspegel in der Zuführeinrichtung (8) selbst erreicht.

12. Vorrichtung gemäß Anspruch 10 oder 11, dadurch gekennzeichnet, daß die Zuführeinrichtung (8) eine Beschickungstrichter-Zuführeinrichtung ist.

13. Vorrichtung gemäß irgendeinem der Ansprüche 10 bis 12, dadurch gekennzeichnet, daß die Zuführeinrichtung (8) in einer Stellung angeordnet ist, die relativ zur Schleudereinrichtung im allgemeinen höher liegt.

14. Vorrichtung gemäß Anspruch 13, dadurch gekennzeichnet, daß die einzugliedernden Gegenstände (A', A'', A''') von der Zuführeinrichtung (8) zur Schleudereinrichtung (7) mit Hilfe der Schwerkraft geliefert werden.

15. Vorrichtung gemäß Anspruch 3, dadurch gekennzeichnet, daß die Schleudereinrichtung (7) eine im allgemeinen hin- und hergehende Bewegung zwischen der hinteren Stellung (Fig. 1) und der vorderen Stellung (Fig. 3) ausführen kann.

16. Vorrichtung gemäß irgendeinem der bisherigen Ansprüche, dadurch gekennzeichnet, daß die Schleudereinrichtung (7) von einer Motoreinrichtung (11) bewegt wird, die eine konstante Vorschubrichtung besitzt.

17. Vorrichtung gemäß Anspruch 16, dadurch gekennzeichnet, daß die Motoreinrichtung einen Elektromotor (11), beispielsweise einen Gleichstrommotor oder einen bürstenlosen Motor, enthält.

18. Vorrichtung gemäß Anspruch 16 oder 17, dadurch gekennzeichnet, daß eine Antriebseinrichtung (12 bis 16) mit einer im allgemeinen schwingenden Bewegung zwischen der Schleudereinrichtung (7) und der Motoreinrichtung (11) angeordnet ist.

19. Vorrichtung gemäß Anspruch 18, dadurch gekennzeichnet, daß die Antriebseinrichtung einen Antrieb (12) enthält, der eine mechanische Bewegungsreduktion ausführen kann.

20. Vorrichtung gemäß Anspruch 19, dadurch gekennzeichnet, daß der Antrieb (12) ein Riemen- oder Kettentrieb ist.

21. Vorrichtung gemäß irgendeinem der Ansprüche 18 bis 20, dadurch gekennzeichnet, daß die Antriebseinrichtung (12 bis 16) eine Eingreifeinrichtung oder eine Kurbel enthält.

22. Vorrichtung gemäß irgendeinem der Ansprüche 3 oder 15 bis 21, dadurch gekennzeichnet, daß die Vorrichtung einen weiteren Fühler (14a) enthält, der die genaue Anordnung der Schleudereinrichtung (7) in der hinteren Stellung erkennen kann.

23. Vorrichtung gemäß irgendeinem der bisherigen Ansprüche, dadurch gekennzeichnet, daß die Schleudereinrichtung (7) einen Hängebühnenaufbau besitzt, um in ihrem Inneren die einzugliedernden Gegenstände (A', A'', A''') aufzunehmen, um sie zum Strom zu schleudern.

24. Vorrichtung gemäß Anspruch 23, dadurch gekennzeichnet, daß der Hängebühnenaufbau von Schwingarmen (9, 10) getragen wird.

25. Vorrichtung gemäß Anspruch 24, dadurch gekennzeichnet, daß die Schwingarme (9, 10) zusammen mit der Hängebühne (7) einen im allgemeinen parallelogrammartigen Aufbau bilden, der mit der Hängebühne (7) gelenkig verbunden ist, die in einer im allgemeinen horizontalen Stellung gehalten wird.

26. Vorrichtung gemäß Anspruch 16 und 24, dadurch gekennzeichnet, daß die Motoreinrichtung (11) auf zumindest einen der Schwingarme (9, 10) wirkt.

## Revendications

1. Dispositif destiné à incorporer dans un courant d'articles (A) comportant des emplacements vides, des articles devant être intégrés (A', A'', A''') introduits de manière sélective dans lesdits emplacements vides, caractérisé en ce qu'il comprend :
- des moyens de détection (6) destinés à détecter la présence des dits emplacements vides dans ledit courant; et
- des moyens de distribution (1) d'articles devant être intégrés (A', A'', A''') généralement disposés en aval des dits moyens de détection (6) dans le sens d'avancement du dit courant d'articles (A); lesdits moyens de distribution (1) comprenant des moyens de lancement (7) qui peuvent projeter lesdits articles devant être intégrés (A', A'', A''') vers ledit emplacement vide à une vitesse et dans une position en corrélation avec la vitesse du dit courant d'articles (A) et avec la disposition des dits emplacements vides.

2. Dispositif selon la revendication 1, caractérisé en ce que lesdits moyens de lancement (7) comprennent une unité balistique qui peut exécuter un mouvement général de lancement des articles devant être intégrés (A', A'', A''') dans le sens d'avancement du courant d'articles (A).

3. Dispositif selon la revendication 2, caractérisé en ce que ledit mouvement de lancement est généralement exécuté entre une position rétractée d'armement (figure 1) et une position finale de lancement (figure 3) à une vitesse qui correspond à la vitesse d'avancement du dit courant d'articles (A) au moins à proximité de ladite position de lancement.

4. Dispositif selon quelqu'une des précédentes revendications, caractérisé en ce qu'il comprend des moyens de traitement (5) qui sont reliés aux dits moyens de détection (6) et qui peuvent commander le fonctionnement des dits moyens de lancement (7) selon un rapport de temps correspondant aux signaux des dits moyens de détection (6) en corrélation avec au moins l'une des dimensions sélectionnées dans le groupe comprenant :
- la distance entre les moyens de détection (6) et les moyens de lancement (7);
- la vitesse du courant d'articles (A);
- la position relative (rythme) des articles (A) dans le courant.

5. Dispositif selon quelqu'une des précédentes revendications, caractérisé en ce que lesdits moyens (7) destinés au lancement des articles devant être intégrés (A', A'', A'') sont placés immédiatement au-dessus du dit courant d'articles (A).

6. Dispositif selon la revendication 1, caractérisé en ce que la position des dits moyens de lancement (7) peuvent être réglés de manière sélective en termes de hauteur par rapport au niveau de support (2) du dit courant d'articles (A).

7. Dispositif selon quelqu'une des précédentes revendications, caractérisé en ce que ledit courant d'articles (A) avance sur un convoyeur (2) entraîné par un moteur (3).

8. Dispositif selon la revendication 7, caractérisé en ce que ledit convoyeur (2) est essentiellement sans aucun dispositif de commande des articles (A).

9. Dispositif selon quelqu'une des précédentes revendications, caractérisé en ce que lesdits moyens de détection (6) comprennent un détecteur photo électrique.

10. Dispositif selon quelqu'une des précédentes revendications, caractérisé en ce que lesdit moyens de distribution comprennent un dispositif d'alimentation (8) qui peut comporter une réserve donnée des dits articles devant être intégrés (A', A'', A''') afin d'alimenter lesdits moyens de lancement (7).

11. Dispositif selon la revendication 10, caractérisé en ce que sont associés au dit dispositif d'alimentation (8) des moyens de détection (15) destinés à détecter le moment où la réserve des dits articles devant être intégrés (A', A'', A''') atteint un niveau de contrôle prédéterminé dans le dispositif d'alimentation (8) même.

12. Dispositif selon la revendication 10 ou la revendication 11, caractérisé en ce que ledit dispositif d'alimentation (8) est un dispositif d'alimentation à trémie.

13. Dispositif selon quelqu'une des revendications 10 à 12, caractérisé en ce que ledit dispositif d'alimentation (8) est disposé dans une position généralement plus haute que celle des dits moyens de lancement.

14. Dispositif selon la revendication 13, caractérisé en ce que lesdits articles devant être intégrés (A', A'', A''') alimentent les moyens de lancement (7) à partir du dispositif d'alimentation (8) par des moyens de gravité.

15. Dispositif selon la revendication 3, caractérisé en ce que les moyens de lancement (7) peuvent exécuter un mouvement général alternatif entre ladite position arrière (figure 1) et ladite position avant (figure 3).

16. Dispositif selon quelqu'une des précédentes revendications, caractérisé en ce que les moyens de lancement (7) sont actionnés par des moyens de moteur (11) ayant un sens d'avancement constant.

17. Dispositif selon la revendication 16, caractérisé en ce que lesdits moyens de moteur se composent d'un moteur électrique (11), tel qu'un moteur à courant continu ou sans balai.

18. Dispositif selon la revendication 16 ou la revendication 17, caractérisé en ce que des moyens d'entraînement (12 à 16) ayant un mouvement général alternatif sont disposés entre lesdits moyens de lancement (7) et lesdits moyens de moteur (11).

19. Dispositif selon la revendication 18, caractérisé en ce que lesdits moyens d'entraînement comprennent un entraînement (12) qui peut exécuter une réduction mécanique du mouvement.

20. Dispositif selon la revendication 19, caractérisé en ce que ledit entraînement (12) est un entraînement par chaîne ou par courroie.

21. Dispositif selon quelqu'une des revendications 18 à 20, caractérisé en ce que lesdits moyens d'entraînement (12 à 16) comprennent un dispositif d'intervention ou une manivelle.

22. Dispositif selon quelqu'une des revendications 3 ou 15 à 21, caractérisé en ce qu'il comprend un détecteur supplémentaire (14a) qui peut identifier le positionnement exact des dits moyens de lancement (7) dans ladite position arrière.

23. Dispositif selon quelqu'une des précédentes revendications, caractérisé en ce que lesdits moyens de lancement (7) comprennent une structure en berceau destinée à recevoir dans sa partie intérieure lesdits articles devant être intégrés (A', A'', A''') de manière à les projeter vers ledit courant.

24. Dispositif selon la revendication 23, caractérisé en ce que ladite structure en berceau est supportée par des bras oscillants (9, 10).

25. Dispositif selon la revendication 24, caractérisé en ce que lesdits bras oscillants (9, 10) en combinaison avec ledit berceau (7) forment une structure généralement en parallélogramme articulée avec ledit berceau (7) généralement maintenu en position horizontale.

26. Dispositif selon la revendication 16 et la revendication 24, caractérisé en ce que lesdits moyens de moteur (11) agissent sur au moins l'un des dits bras oscillants (9, 10).
